# EUROPEAN PATENT APPLICATION

(11) **EP 4 443 690 A1**
(43) Date of publication of application: **09.10.2024**
(21) Application number: 22900070.8
(22) Date of filing: 27.09.2022
(51) Int. Cl.: H02J 3/26

(54) **ELECTRIC VEHICLE CHARGING BALANCE CONTROL METHOD AND SYSTEM**

(30) Priority: 03.12.2021 CN 202111470503
(71) Applicant: Xiamen Yaxon Zhilian Technology Co., Ltd., Xiamen, Fujian 361000 (CN)
(72) Inventor: TU, Yankai, Xiamen, Fujian 361000 (CN); YE, Xuhui, Xiamen, Fujian 361000 (CN)
(74) Representative: Hofmann, Andreas
(86) International application number: PCT/CN2022/121735
(87) International publication number: WO 2023/098262

(57) **Abstract**

The present invention relates to the technical field of electric vehicle charging management, in particular to a control method and system for charging balance of electric vehicle. The method includes: step S10: obtaining a current time point and performing step S20 when an optimization time point is reached; step S20: collecting data of each charging station in a region; and performing step S30 to step S50 when a vehicle is connected to or disconnected from the charging station or a charging power of the charging station changes; step S30: resetting a pre-allocated power for electricity supply at each phase of a power grid in the region; step S40: sorting charging powers Pj of all the charging stations in the region in descending order by absolute value; step S50: starting to traverse all the charging stations from a charging station with a highest charging power and switching the charging station to a phase of a corresponding power grid depending on a positive or negative value of the charging power Pj. In this method, the charging phase of each charging station can be controlled dynamically in real time, so as to balance the power grid loads in the region where the charging station is located, allowing for simple use.

## Description

### TECHNICAL FIELD

The present invention relates to the technical field of electric vehicle charging management, in particular to a control method and system for charging balance of electric vehicle.

### BACKGROUND TECHNOLOGY

The widespread application of new energy vehicles and charging stations causes significant burdens to the power grid, especially in large parking lots, parking garages, and dedicated charging station clusters. The stochastic number of new energy vehicles that are parked for charging and the various remaining powers of these vehicles result in different charging demands. The combination of these multiple stochastic factors is likely to lead to imbalance of the power grid. Because the power grid transmission lines typically use three-phase alternating current and when vehicles, after connected to the charging station, are charged, they typically draw single-phase power. Therefore, if charging stations maintain static single-phase charging, under the influence of the foregoing multiple stochastic factors, charging of the new energy vehicles is likely to cause significant imbalance in load of phases of the transmission lines. This leads to negative-sequence and zero-sequence currents on the transmission lines, causing a decrease in the efficiency of the power grid and even potential fault.

### DISCLOSURE OF THE INVENTION

A first objective of the present invention is to provide a control method for charging balance of electric vehicle, such that the charging phase of each charging station can be dynamically switched in real time, to balance the power grid loads in a region.

A second objective of the present invention is to provide a control system for charging balance of electric vehicle, which can perform the control method for charging balance of electric vehicle.

To achieve the first objective of the present invention, the present invention provides the following technical solution:
The control method for charging balance of electric vehicle includes the following steps:
step S10: obtaining a current time point and performing step S20 when an interval dt between the current time point and a last optimization time point reaches a preset optimization cycle T;
step S20: collecting data of each charging station in a region; and performing step S30 when a vehicle is connected to or disconnected from the charging station or a charging power of the charging station changes; otherwise, returning to step S10;
step S30: resetting a pre-allocated power for electricity supply at each phase of a power grid in the region; and proceeding to step S40;
step S40: sorting charging powers Pj of all the charging stations in the region in descending order by absolute value, where j = 1, 2, 3, ..., m, and m represents the number of the charging stations; and proceeding to step S50;
step S50: starting to traverse all the charging stations from a charging station with a highest charging power absolute to perform the following operation depending on a positive or negative value of the charging power Pj, where
when the charging power Pj is greater than 0, switching the charging station to a phase with a smallest pre-allocated power Gi, where the charging power Pj is accumulated into the pre-allocated power Gi at the phase, that is, Gi=Gi+Pj;
when the charging power Pj is less than 0, switching the charging station to a phase with a largest pre-allocated power Gi, where the charging power Pj is accumulated into the pre-allocated power Gi at the phase, that is, Gi=Gi+Pj; or
when the charging power Pj is equal to 0, disconnecting output of the charging station.

Further, a value range of the optimization cycle is 1 min to 120 min.

Further, the value range of the optimization cycle is 15 min to 120 min.

In the control method for charging balance of electric vehicle of the present invention, the charging phase of each charging station can be controlled dynamically in real time, so as to balance the power grid loads in the region where the charging station is located, allowing for simple use.

To achieve the second objective of the present invention, the present invention provides the following technical solution:

A control system for charging balance of electric vehicle is provided, including a data center and a plurality of charging stations, where the data center is used to perform the foregoing control method for charging balance of electric vehicle.

The charging station is provided with a three-phase switching switch and a charging switch, the three-phase switching switch is controlled by the data center and configured to switch a charging phase of the charging station; and the charging switch is controlled by the data center and configured to disconnect output of the charging station.

### BRIEF DESCRIPTION OF THE DRAWINGS

FIG. 1 is a flowchart of a control method for charging balance of electric vehicle according to the present invention;
FIG. 2 is a flowchart of step S50 in FIG. 1;
FIG. 3 is a structural diagram of a control system for charging balance of electric vehicle according to the present invention.

### DESCRIPTION OF EMBODIMENTS

To further describe each embodiment, the present invention provides accompany drawings. These accompanying drawings are part of content disclosed by the present invention and mainly used for illustrating embodiments, and can be used with reference to relevant descriptions in the specification to explain the operational principles of the embodiments. With reference to the content, persons of ordinary skill in the art can understand other possible implementations and the advantages of the present invention. The assemblies in the figure are not drawn to scale, and similar assembly symbols are typically used to represent similar assemblies.

The present invention is further described with reference to the accompanying drawings and specific implementations.

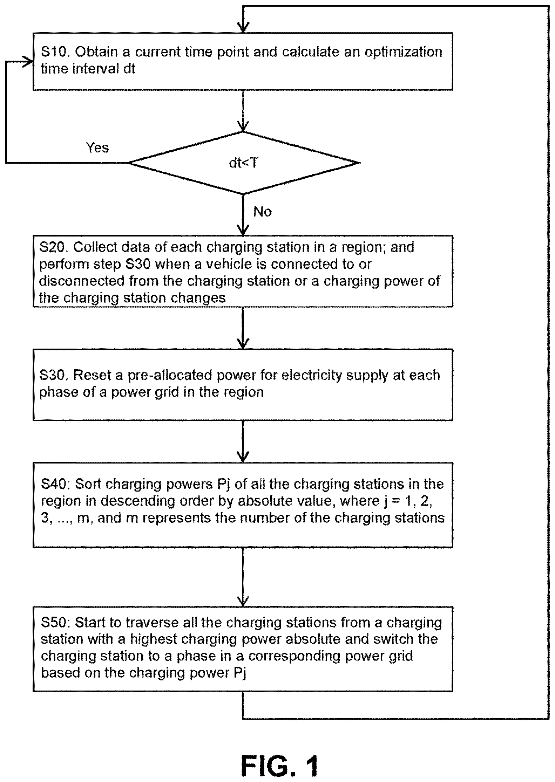

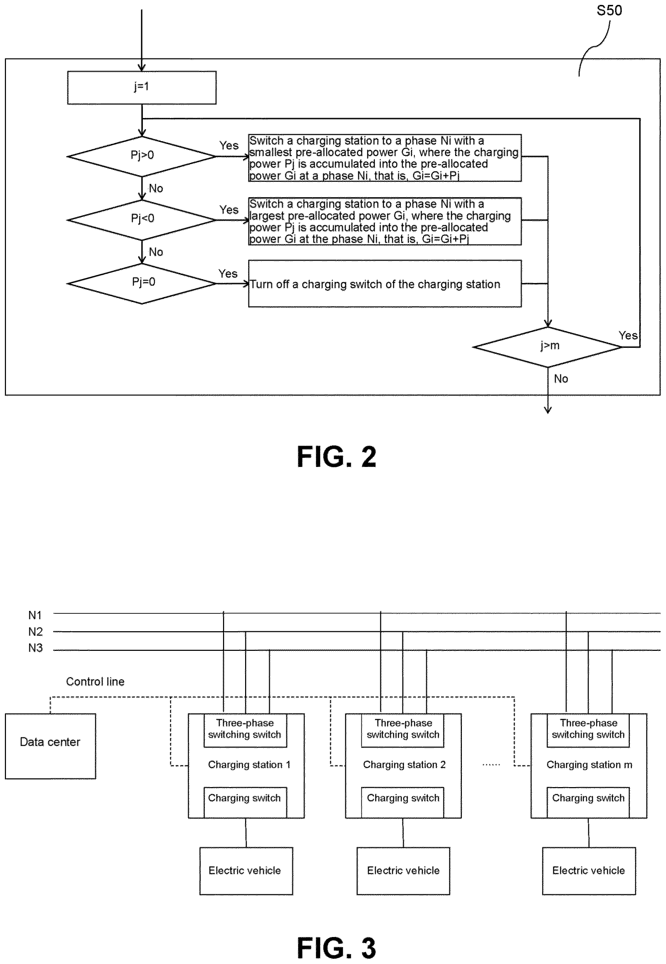

As shown in FIG. 1 and FIG. 2, the present invention provides a control method for charging balance of electric vehicle, including the following steps:
Step S10: Obtain a current time point and perform step S20 when an interval dt between the current time point and a last optimization time point reaches a preset optimization cycle T.
Step S20: Collect data of each charging station in a region, where the data includes whether a vehicle is connected, a current charging power, a current charging phase, a current charging time point, or the like; and perform balance optimization control, that is, step S30 when a vehicle is connected to or disconnected from the charging station or a charging power of the charging station changes; otherwise, skip the step of balance optimization control, and return to step S10.

The step of balance optimization control includes step S30 to step S50.
Step S30: Reset a pre-allocated power for electricity supply at each phase of a power grid in the region.
Step S40: Sort charging powers Pj of all the charging stations in the region in descending order by absolute value, where j = 1, 2, 3, ..., m, and m represents the number of the charging stations. A positive charging power indicates that a vehicle is charged from a power grid and a negative power grid indicates that a vehicle is feeding back current in the opposite direction to the power grid. Feeding back current in the opposite direction refers to a peak-valley charging function of the electric vehicles. Specifically, the electric vehicle is charged during an off-peak electricity period, and after fully charged, it feeds back part of the current to the power grid during a peak electricity period.
Step S50: Start to traverse all the charging stations from a charging station with a highest charging power absolute to perform the following operation depending on a positive or negative value of the charging power Pj.

When the charging power Pj is greater than 0, the charging station is switched to a phase Ni with a smallest pre-allocated power Gi, where the charging power Pj is accumulated into the pre-allocated power Gi at the phase Ni, that is, Gi=Gi+Pj.

When the charging power Pj is less than 0, the charging station is switched to a phase Ni with a largest pre-allocated power Gi, where the charging power Pj is accumulated into the pre-allocated power Gi at the phase Ni, that is, Gi=Gi+Pj.

When the charging power Pj is equal to 0, output of the charging station is disconnected.

Return to step S10 after step S50 is completed (that is, the balance optimization control is completed).

This manner balances the loads at three phases of the power grid. In addition, this manner of configuring the charging phases of the charging stations one by one does not cause a large fluctuation in the power grid.

The optimization period T is determined depending on the traffic flow of vehicles entering and exiting the parking lot or charging area. Obviously, if there is a small flow of vehicles, the optimization period T may be longer to avoid frequent switching of charging phases. If there is a large traffic flow of vehicles entering and exiting, the randomness and imbalance factors of charging become greater, and the optimization period T needs to be smaller. This is beneficial for timely balancing of the three-phase power grid. In specific engineering practice, the optimal relationship between a traffic flow of vehicles in a different parking lot or charging area (with a different number of charging stations) and an optimization period T can be gradually adjusted based on the collection of the balance optimization effects, so as to determine the optimization period T based on statistics on the current traffic flow of vehicles. The value of the optimization period may be less than 1 min. Further, preferably, a value range of the optimization cycle T is 15 min to 120 min.

In the control method for charging balance of electric vehicle of the present invention, the charging phase of each charging station can be controlled dynamically in real time, so as to balance the power grid loads in the region where the charging station is located.

As shown in FIG. 3, based on the same invention concept, the present invention further provides a control system for charging balance of electric vehicle, including a data center and a plurality of charging stations. The data center is used to perform the control method for charging balance of electric vehicle in the foregoing embodiment.

The charging station is provided with a three-phase switching switch and a charging switch, the three-phase switching switch is controlled by the data center and configured to switch a charging phase of the charging station; and the charging switch is controlled by the data center and configured to disconnect output of the charging station.

The control line in FIG. 3 only illustrates the communication connection between the data center and the charging station. Preferably, between the charging station and the data center, an industrial bus controller such as a CAN bus controller may be disposed. The data center establishes communication connection with each charging station through industrial bus controller such as a CAN bus controller.

Although the present invention is specifically described with reference to the preferred implementation, those skilled in the art should understand that various changes may be made to the present invention in form and detail without departing from the spirit and scope of the present invention as defined by the appended claims, and these changes fall into the protection scope of the present invention.

## Claims

1. A control method for charging balance of electric vehicle, **characterized by** comprising the following steps:
step S10: obtaining a current time point and performing step S20 when an interval dt between the current time point and a last optimization time point reaches a preset optimization cycle T;
step S20: collecting data of each charging station in a region; and performing step S30 when a vehicle is connected to or disconnected from the charging station or a charging power of the charging station changes; otherwise, returning to step S10;
step S30: resetting a pre-allocated power for electricity supply at each phase of a power grid in the region; and proceeding to step S40;
step S40: sorting charging powers Pj of all the charging stations in the region in descending order by absolute value, wherein j = 1, 2, 3, ..., m, and m represents the number of the charging stations; and proceeding to step S50;
step S50: starting to traverse all the charging stations from a charging station with a highest charging power to perform the following operation depending on a positive or negative value of the charging power Pj, wherein
when the charging power Pj is greater than 0, switching the charging station to a phase with a smallest pre-allocated power Gi, wherein the charging power Pj is accumulated into the pre-allocated power Gi at the phase, that is, Gi=Gi+Pj;
when the charging power Pj is less than 0, switching the charging station to a phase with a largest pre-allocated power Gi, wherein the charging power Pj is accumulated into the pre-allocated power Gi at the phase, that is, Gi=Gi+Pj; or
when the charging power Pj is equal to 0, disconnecting output of the charging station; and
returning to step S10 after step S50 is completed.

2. The control method for charging balance of electric vehicle according to claim 1, **characterized in that** a value range of the optimization cycle is 1 min to 120 min.

3. The control method for charging balance of electric vehicle according to claim 1, **characterized in that** a value range of the optimization cycle is 15 min to 120 min.

4. A control system for charging balance of electric vehicle, comprising a data center and a plurality of charging stations, **characterized in that** the data center is used to perform the control method for charging balance of electric vehicle according to any one of claims 1 to 3; and
the charging station is provided with a three-phase switching switch and a charging switch, the three-phase switching switch is controlled by the data center and configured to switch a charging phase of the charging station; and the charging switch is controlled by the data center and configured to disconnect output of the charging station.
